# EUROPÄISCHE PATENTANMELDUNG

(11) **EP 1 840 448 A1**
(43) Veröffentlichungstag der Anmeldung: **03.10.2007**
(21) Anmeldenummer: 06006718.8
(22) Anmeldetag: 30.03.2006
(51) Int. Cl.: F16P 1/00, B23Q 11/08

(54) **Variable Schutzkabine**

(71) Anmelder: Weeke Bohrsysteme GmbH, 33442 Herzebrock-Clarholz (DE)
(72) Erfinder: Kortenjan, Peter, 33442 Herzebrock-Clarholz (DE); Heimann, Reinhard, 33332 Gütersloh (DE)
(74) Vertreter: HOFFMANN EITLE

(57) **Zusammenfassung**

Verfahren zur Pendelbearbeitung von Werkstücken (6a,6b), umfassend die folgenden Schritte:
- Definieren von äußersten Bearbeitungspositionen auf einer Werkstückauflage in Abhängigkeit der Werkstückabmessungen
- Einstellen eines Schutzbereichs einer variablen Schutzkabine (4) jeweils auf Grundlage der äußersten Bearbeitungspositionen
- Bearbeiten des Werkstücks (6a).

## Beschreibung

Die vorliegende Erfindung bezieht sich auf ein Verfahren sowie eine Vorrichtung zur Pendelbearbeitung von Werkstücken, insbesondere zum Einsatz in der Holz- oder Möbelindustrie.

### Stand der Technik

Unter Pendelbearbeitung von Werkstücken versteht man, dass ein Werkstück auf einer Auflage einer Bearbeitungsmaschine (z.B. eines Bearbeitungszentrums, BAZ) positioniert wird, das Werkstück in einem seinen Abmessungen entsprechenden Bereich der Auflage bearbeitet wird, während ein weiteres Werkstück gleichzeitig von einer Bedienperson oder automatisch auf einem nicht von dem Werkzeug der Bearbeitungsmaschine zur Bearbeitung eingenommenen Teil der Auflage gerüstet (aufgelegt und vorbereitet) werden kann. Nach Beenden der Bearbeitung des ersten Werkstücks fährt das Werkzeug dann zum weiteren Werkstück und bearbeitet dieses, während das erste Werkstück nun von der Auflage abgenommen und ein neues Werkstück aufgelegt werden kann. Danach beginnt der Zyklus wieder von vorn, so dass das Bearbeitungswerkzeug sozusagen zwischen den Werkstücken hin- und herpendelt und jeweils ein Werkstück von einer Bedienperson oder automatisch gehandhabt werden kann.

Um den Sicherheitsvorschriften zu genügen, muss bei allen Bearbeitungsmaschinen zur Pendelbearbeitung ein Schutzmechanismus vorgesehen werden, der verhindert, dass das Bedienpersonal in den Arbeitsbereich des Werkzeugs, z.B. einer rotierenden Bohrspindel, geraten und sich verletzen könnte. Hierzu werden herkömmlicherweise neben Umzäunungen, welche die gesamte Maschine umgeben, im Falle einer Rüstung über Bedienpersonen vor der Maschinenvorderseite platzierte Schaltmatten verwendet, deren Schaltung den unterschiedlichen und variablen Bearbeitungszuständen der Bereiche der Auflage entspricht. Zum Beispiel ist eine Schaltmatte, die im Wesentlichen dem gerade vom nicht bearbeiteten Werkstück eingenommenen Bereich der Auflage entspricht (wo eine weitere Platte gerüstet werden kann), temporär passiv geschaltet und daher wird der entsprechende Bereich für die Bedienperson temporär nutzbar gemacht. Eine andere Schaltmatte hingegen, die im Wesentlichen dem vom bearbeiteten Werkstück eingenommenen Bereich der Auflage entspricht, wird temporär aktiv geschaltet, damit eine Bedienperson sich während der Bearbeitung des Werkstücks nicht dem Werkzeug, das über den Bereich des Werkstücks verfährt, annähern und möglicherweise verletzen kann. Zudem wird häufig eine weitere Schaltmatte vorgesehen, die dem Bereich der Auflage entspricht, der sich zwischen den zuvor genannten Bereichen befindet und in den das Werkzeug sowohl bei der Bearbeitung eines Werkstücks als auch bei der Bearbeitung des anderen Werkstücks hineinfährt. Dieser Bereich kann nie für die Benutzung durch das Bedienpersonal freigegeben werden und somit wird die entsprechende Schaltmatte permanent aktiv geschaltet.

Die Abmessungen der Schaltmatten sind dabei so gewählt, dass die das Bedienpersonal ausschließenden Bereiche eine Ausdehnung haben, die auf die größten zu bearbeitenden Werkstücke, sowie die größten eingesetzten Werkzeuge bzw. Aggregate abgestimmt sind, wobei noch zusätzlich ein Sicherheitsabstand vorgesehen wird. Die Schaltung der Schaltmatten ändert sich dann mit der Zeit in Abhängigkeit von der Position des bearbeitenden Werkzeugs über dem einen oder anderen Werkstück.

Obwohl die Abmessungen der Bereiche auf der Auflage aufgrund unterschiedlicher Werkstückabmessungen variabel sein könnten, ergibt sich aus dem obigen, dass das Vorsehen der drei Schaltmatten, deren Abmessungen fest sind, notwendigerweise eine Obergrenze für die Länge des bearbeitbaren Werkstücks und damit für den Bedienbereich ergibt, die sich aus den äußersten Bearbeitungspositionen am Rand der Auflage, aus den Abmessungen der mittleren, immer aktiven Schaltmatte, sowie aus Sicherheitsabständen zusammensetzt. Eine typische maximale Werkstücklänge im Möbelbau beträgt bei einer Auflagenlänge von 3250 mm lediglich 1100 mm, d.h. dass nur ein Drittel der Gesamtfläche vom Werkstück eingenommen werden kann bzw. dem Bedienpersonal zur Verfügung steht.

Die Nachteile der Schaltmatten sind demnach, dass einerseits nur Werkstücke bis zu einer geringeren Maximalgröße im Vergleich zur Größe der Auflage bearbeitet werden können, und dass andererseits selbst bei kleinen Werkstücken der von den festen Schaltmatten, insbesondere der immer aktiven Schaltmatte, definierte Schutzbereich nicht verkleinert werden kann, um mehr Platz für die Rüstung durch Bedienpersonal zur Verfügung zu stellen. Des Weiteren ist eine den Sicherheitsvorschriften entsprechende Schaltung der Matten relativ aufwendig und somit teuer.

### Darstellung der Erfindung

Die Aufgabe der vorliegenden Erfindung ist es demnach, die oben erwähnten Probleme zu lösen und ein Verfahren sowie eine Vorrichtung zur Pendelbearbeitung von Werkstücken zu entwickeln, die dem Bedienpersonal in Abhängigkeit der Werkstückabmessungen einen möglichst großen Bereich zum Rüsten zur Verfügung zu stellen, wobei gleichzeitig die Sicherheitsvorschriften erfüllt werden, die das Bedienpersonal hindern, sich den zur Pendelbearbeitung eingesetzten Werkzeugen anzunähern und sich an ihnen zu verletzen. Zudem soll das bisherige Konzept der Sicherheitsmatten durch eine kostengünstigere Alternative ersetzt werden.

Diese Aufgabe wird durch ein Verfahren nach Anspruch 1, sowie durch eine Vorrichtung nach Anspruch 8 gelöst.
Das erfindungsgemäße Verfahren zur Pendelbearbeitung von Werkstücken umfasst den Schritt des Definierens von äußersten Bearbeitungspositionen auf einer Werkstückauflage in Abhängigkeit der Werkstückabmessungen, den Schritt des Einstellens eines Schutzbereichs einer variablen Schutzkabine jeweils auf Grundlage der äußersten Bearbeitungspositionen und den Schritt des Bearbeiten des Werkstücks. Auf diese Weise wird der vom Werkzeug zur Bearbeitung beanspruchte Bereich effektiv abgesichert, und gleichzeitig ein von den Werkstückabmessungen abhängiger, variabler Bereich für das Bedienpersonal zur Rüstung weiterer Werkstücke zur Verfügung gestellt, da sich die Schutzkabine mit ihrem Schutzbereich den Werkstückabmessungen anpasst. Auch wird damit die Maximalgröße eines zu bearbeitenden Werkstücks nicht mehr starr festgelegt, so dass zur Bearbeitung eines langen Werkstücks lediglich ein entsprechend kurzes (oder kein) Werkstück für die nachfolgende Bearbeitung gewählt werden muss.

Die äußersten Bearbeitungspositionen stellen die Positionen dar, an die ein Werkzeug einer Maschine zur Pendelbearbeitung fahren muss, um die äußersten Randpositionen des Werkstücks, die zum Beispiel durch ein Programm vorgegeben sind, zu bearbeiten. Diese können demnach automatisch durch Auslesen von Programmdaten und Berücksichtigung der Abmessungen und Eigenschaften des jeweiligen Werkzeugs oder Aggregats bestimmt werden oder vom Bedienpersonal manuell eingegeben werden. Der Schutzbereich im Sinne dieser Erfindung ist der Bereich, der den gesetzlich vorgeschrieben Auflagen zum Schutze des Bedienpersonals genügt und ist mindestens so groß bemessen, dass er das Bedienpersonal daran hindert, sich an den Werkzeugen zu verletzen. Variabel im Sinne dieser Erfindung bedeutet, dass der Schutzbereich jederzeit veränderten Gegebenheiten angepasst werden kann, insbesondere veränderten Werkstück- oder Werkzeugabmessungen, oder auf Eingabe des Bedienpersonals. Die Schutzkabine dient der physikalischen Abgrenzung dieses Schutzbereichs. Nähere Einzelheiten der Schutzkabine werden weiter unten diskutiert.

In einer bevorzugten Ausführungsform werden mehrere Werkstücke auf die Werkstückauflage aufgelegt, die dementsprechend mehrere äußerste Bearbeitungspositionen definieren. Auf diese Weise kann die Pendelbearbeitung entsprechend der Erfindung eine Vielzahl von Werkstücken bearbeiten und so effektiv die Sicherheitsvorschriften auch für mehrere Werkstücke auf der Auflage erfüllen. Insbesondere im Hinblick auf die Vielzahl unterschiedlicher Werkstückabmessungen im Produktionsablauf wäre eine Sicherheitsvorrichtung mit Schaltmatten in diesem Fall umso schwerer realisierbar, je höher die Anzahl der Werkstücke ist.

Vorteilhafterweise werden im Rahmen der Pendelbearbeitung mehrere, den Werkstücken entsprechende Bearbeitungspositionen nacheinander angefahren. Dies optimiert die nötige Bearbeitungszeit und erlaubt somit hohe Produktionsraten.

Bevorzugt wird in jeder Bearbeitungsposition der Schutzbereich der variablen Schutzkabine den äußersten Bearbeitungspositionen des zu bearbeitenden Werkstücks entsprechend eingestellt. Damit wird sichergestellt, dass einerseits die Sicherheitsvorkehrungen für jedes Werkstück erfüllt werden, jedoch andererseits stets ein entsprechend großer Bereich zur Rüstung oder Handhabung weiterer Werkstücke zur Verfügung steht.

Vorzugsweise, und im Hinblick auf die strengen Sicherheitsauflagen, ergibt sich eine jeweils minimale Ausdehnung des Schutzbereichs aus den Abmessungen eines Werkstücks unter Berücksichtigung eines Sicherheitsabstands zu Bearbeitungswerkzeugen. Dadurch wird die unterste Grenze der Ausdehnung des Schutzbereichs definiert, die mit den geltenden Sicherheitsauflagen in Einklang ist. Gleichzeitig wird somit der maximale Bereich zur Rüstung oder Handhabung seitens des Bedienpersonals bereitgestellt.

In einer bevorzugten Ausführungsform umfasst der Schritt des Einstellens des Schutzbereichs das Positionieren von Endwänden der Schutzkabine an den äußersten Bearbeitungspositionen unter Berücksichtigung eines Sicherheitsabstands zu Bearbeitungswerkzeugen. Durch die Positionierung von Endwänden wird der Schutzbereich den Sicherheitsauflagen entsprechend auf einfache Weise abgesteckt, ohne dass weitere Maßnahmen zur Absicherung nötig wären. Dies vereinfacht auch den konstruktiven Aufwand zur Bereitstellung einer Sicherheitsvorrichtung.

Es ist besonders bevorzugt, dass die Schutzkabine das gerade in Bearbeitung befindliche Werkstück umgibt, während der von der Schutzkabine ausgeschlossene Bereich der Werkstückauflage frei für die Rüstung bzw. Entnahme eines oder mehrerer weiterer Werkstücke zur Verfügung steht. Dadurch kann die Arbeitseffizienz sowie die Produktionsrate erhöht werden.

Die erfindungsgemäße Vorrichtung zur Pendelbearbeitung von Werkstücken umfasst eine Werkstückauflage, ein über der Werkzeugauflage verfahrbares Bearbeitungsaggregat sowie eine variable Schutzkabine, deren Ausdehnung in Abhängigkeit der Abmessungen der zu bearbeitenden Werkstücke einstellbar ist. Es ergeben sich dieselben Vorteile, die im Zusammenhange mit dem Verfahren des Hauptanspruchs erwähnt wurden, nämlich die effektive Absicherung des vom Werkzeug zur Bearbeitung beanspruchte Bereich und eine gleichzeitige Bereitstellung eines von den Werkstückabmessungen abhängigen, variablen Bereichs für das Bedienpersonal zur Rüstung weiterer Werkstücke. Auch die Maximalgröße eines zu bearbeitenden Werkstücks ist nicht mehr starr festgelegt.

Die Werkstückauflage ist hierbei im Normalfall ein ebener Tisch, jedoch sind dem Fachmann verschiedene andere Auflagekonstruktionen mit Aufspannelementen mechanischer oder pneumatischer Art bekannt. Das Bearbeitungsaggregat im Sinne der Erfindung umfasst zum Beispiel einen Ausleger oder ein Portal mit einem daran angebrachten Bearbeitungswerkzeug, wie zum Beispiel einem Bohrer oder Fräser, wobei der Ausleger oder das Portal das Werkzeug in der Ebene der Auflage sowie senkrecht dazu verfahren werden kann.

Bevorzugt besteht die Schutzkabine aus Paneelen, die miteinander gekoppelt und teleskopartig ausziehbar sind, um so eine variable Ausdehnung der Schutzkabine zu ermöglichen. Dieser einfache Aufbau erfordert keine komplizierten mechanischen oder elektromechanischen Strukturen und ist somit kostengünstiger und wartungsärmer bei gleichzeitig hoher Schutzwirkung.

Besonders bevorzugt ist die Ausdehnung der Schutzkabine in Längs- und/oder Querrichtung variabel, so dass die erfindungsgemäßen Vorteile der Erfindung für eine große Vielfalt von Formen und Abmessungen von Werkstücken erzielt werden können.

In einer vorteilhaften Ausführungsform umfasst die Schutzkabine einen die Paneele tragenden Rahmen. Dieser Rahmen kann um die gesamte Bearbeitungsmaschine herum vorgesehen werden und vereinfacht weiter die konstruktive Gestaltung der Paneele, die zum Beispiel Vorhang-artig am Rahmen aufgehängt oder im Rahmen stehend getragen werden können.

Auch ist es vorteilhaft, die Paneele aus Kunststoff oder Metall zu gestalten. Diese Materialien erfüllen einerseits die vorgeschriebenen Sicherheitsaspekte, sind jedoch andererseits kostengünstig. Als Beispiel für ein Kunststoffmaterial sei insbesondere splitterfreies Plexiglas wie Makrolon genannt, das zudem eine Sichtkontrolle des Bearbeitungsvorgangs ermöglicht, wobei dennoch die Sicherheitsvorkehrungen beibehalten bleiben. Für Sonderfälle kann es auch vorteilhaft sein, die Paneele aus Sicherheitsglas zu gestalten.

### Kurze Beschreibung der Zeichnungen

Fig. 1 zeigt eine perspektivische Ansicht einer herkömmlichen Vorrichtung zur Pendelbearbeitung mit Schaltmatten;
Fig. 2 zeigt eine perspektivische Ansicht einer Vorrichtung zur Pendelbearbeitung gemäß einer Ausführungsform der Erfindung in einer ersten Bearbeitungsposition;
Fig. 3 zeigt eine perspektivische Ansicht der Vorrichtung zur Pendelbearbeitung gemäß einer Ausführungsform der vorliegenden Erfindung beim Einstellen der Schutzkabine während des Wechsels von der ersten zu einer zweiten Bearbeitungsposition;
Fig. 4 zeigt eine vergrößerte perspektivische Ansicht eines Details der Vorrichtung gemäß einer Ausführungsform der vorliegenden Erfindung, das die Positioniermittel zum Einstellen der Schutzkabine darstellt; und
Fig. 5 zeigt eine perspektivische Ansicht der Vorrichtung zur Pendelbearbeitung gemäß einer Ausführungsform der Erfindung in der zweiten Bearbeitungsposition;

### Wege zur Ausführung der Erfindung

Im folgenden wird im Zuge eines Beispiels eine Ausführungsform der vorliegenden Erfindung beschrieben, die in den beigefügten Zeichnungen veranschaulicht ist.

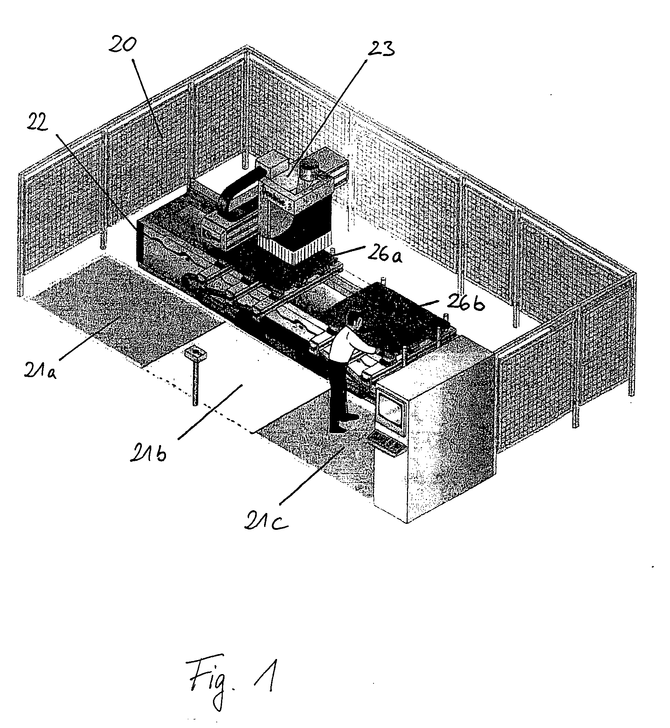

Zunächst jedoch zeigt Figur 1 eine Vorrichtung zur Pendelbearbeitung des Stands der Technik, die mit einem die Bearbeitungsmaschine hinten und seitlich umgebenden Sicherheitszaun 20 sowie mit vor der Maschine angeordneten Schaltmatten 21a, 21b, 21c versehen ist. Die Maschine in Figur 1 ist zur Pendelbearbeitung von zwei Werkstücken 26a, 26b ausgelegt und somit sind drei Schaltmatten vorgesehen. In der Zeichnung wird auf der linken Seite des Aufspanntisches 22 (Auflage) ein Werkstück 26a vom Bearbeitungsaggregat 23 bearbeitet, während auf der rechten Seite eine Bedienperson ein nachfolgend zu bearbeitendes Werkstück 26b rüstet. Aufgrund der Sicherheitsvorschriften darf die Bedienperson nicht in den Arbeitsbereich des Bearbeitungsaggregats bzw. - werkzeugs kommen, so dass die linke Schaltmatte 21a aktiv geschaltet ist und bei Betreten der Schaltmatte die Bearbeitungsmaschine sofort stoppen würde. Die mittlere Schaltplatte 21b ist, bei der dargestellten, für zwei Werkstücke ausgelegten Maschine, dauerhaft aktiv geschaltet, da der ihr entsprechende Bereich des Aufspanntisches sowohl bei einer Bearbeitung auf der linken wie auf der rechten Seite von der Maschine durchfahren wird und somit die mittlere Schaltmatte 21b zu keinem Zeitpunkt während des Betriebs der Maschine vom Bedienpersonal betreten werden darf. Die rechte Schaltmatte 21c hingegen ist passiv geschaltet, da der entsprechende Bereich des Aufspanntisches 22 während der Bearbeitung des linken Werkstücks 26a nicht vom Bearbeitungsaggregat 23 genutzt wird und zur Rüstung des nächsten Werkstücks 26b zur Verfügung steht.

Wie aus dieser Beschreibung der herkömmlichen Vorrichtung hervorgeht, muss zur Erfüllung der Sicherheitsvorschriften sowohl ein Zaun, der die Maschine von hinten und seitlich absichert, als auch eine aufwendige Schaltmattenanordnung vor der Maschine vorgesehen werden. Dies trägt einerseits nicht unwesentlich zu den Kosten der Sicherheitsvorkehrungen bei, und stellt andererseits einen nur begrenzten, von der passiven Schaltmatte definierten Arbeitsbereich zur Rüstung oder Entnahme des noch zu bearbeitenden oder schon bearbeiteten Werkstücks zur Verfügung. Werkstücke, die größere Abmessungen als dieser Arbeitsbereich haben, können ohne Verletzung der Sicherheitsvorschriften nicht mit der Maschine bearbeitet werden.

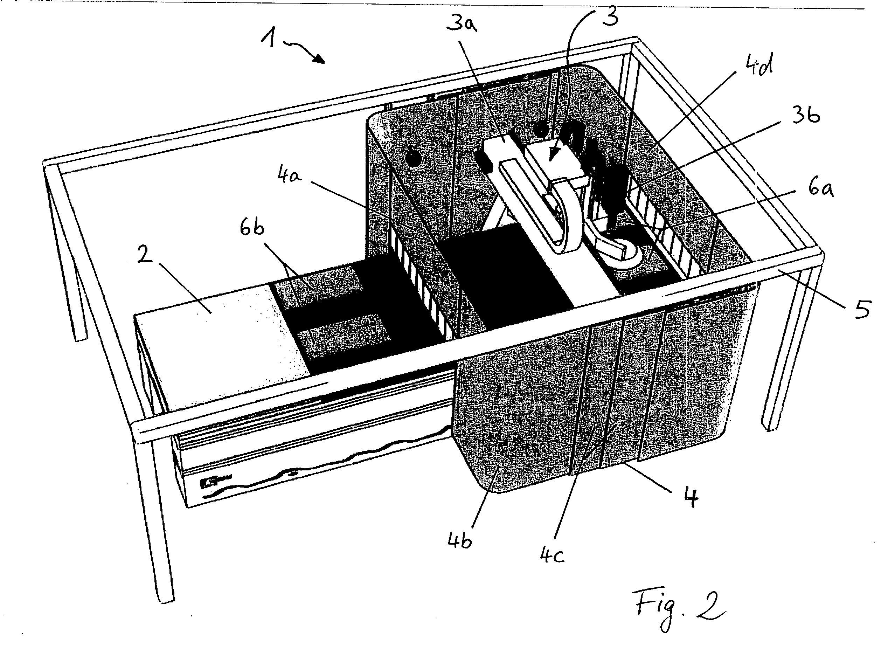

Figur 2 zeigt eine Ausführungsform einer Bearbeitungsmaschine entsprechend der vorliegenden Erfindung. Die Maschine 1 umfasst einen Aufspanntisch 2, ein Bearbeitungsaggregat 3 in Form eines verfahrbaren Auslegers 3a mit einem daran angebrachten Werkzeug 3b, sowie eine variable Schutzkabine 4, die aus teleskopisch ein- und ausfahrbaren Paneelen besteht, welche vorhangartig an einem die Maschine umgebenden Rahmen 5 aufgehängt sind. Auf dem Aufspanntisch sind auf der rechten und linken Seite jeweils zwei Werkstücke 6a, 6b aufgelegt, von denen sich das rechte Paar 6a in der Zeichnung gerade in Bearbeitung befindet. Die Schutzkabine 4 umgibt den Bearbeitungsbereich des Bearbeitungsaggregats 3 und verhindert, dass eine Bedienperson dem Bearbeitungsaggregat 3 zu nahe kommt.

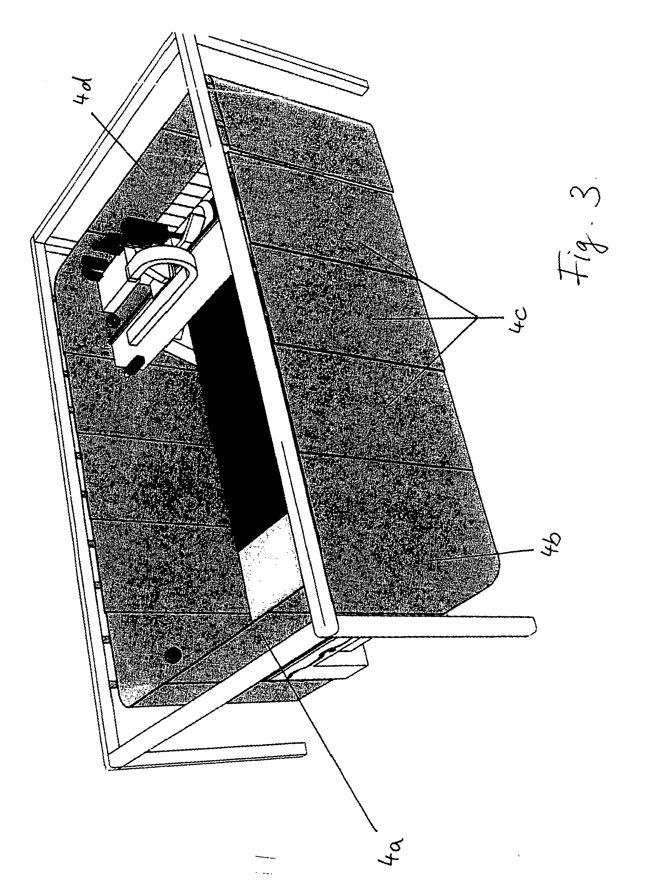

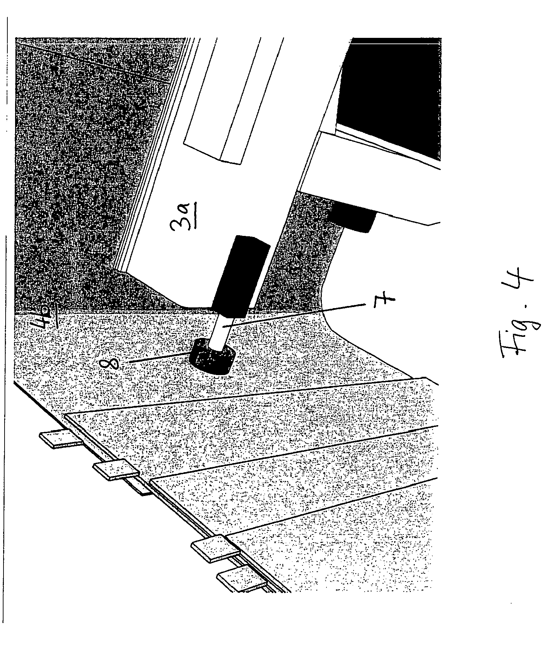

Nach Beenden der Bearbeitung des rechten Werkstückpaares 6a wird die Bearbeitungsmaschine 1 zum Beispiel durch Programmierung angewiesen, das Bearbeitungsaggregat 3 nach links in die zweite Bearbeitungsposition zu fahren und gleichzeitig jedoch den Schutzbereich der Schutzkabine 4 so einzustellen, dass zu keinem Zeitpunkt eine Gefährdung einer Bedienperson gegeben ist. Wie in Figur 3 gezeigt, muss dazu zunächst die linke, senkrecht zur Verfahrrichtung gelegene Wand 4a der Schutzkabine in die zur Bearbeitung des linken Werkstückpaars 6b erforderliche Position am linken Ende des Tisches 2 gefahren werden. Wie in Figur 4 gezeigt, greift hierzu ein auf dem Ausleger 3a angebrachter, ausfahrbarer Stab 7 mit einer Eingriffsöffnung 8 an einem Eckpaneel 4b ein, um das Eckpaneel 4b gemeinsam mit dem Ausleger 3a verfahren zu können, und bringt es in die linke Endposition. Gleichzeitig werden dabei die zur Verfahrrichtung parallelen Wände 4c der Schutzkabine 4 teleskopisch ausgefahren, so dass der Schutzbereich stets abgeschirmt bleibt (siehe Figur 3).

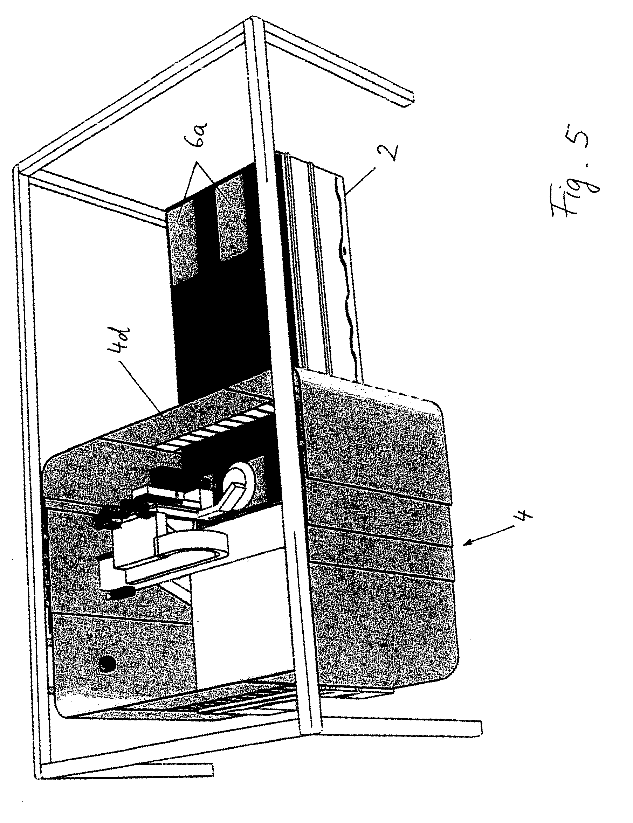

Dann wird auf analoge Weise die rechte, senkrecht zur Verfahrrichtung gelegene Wand 4d der Schutzkabine in die zur Bearbeitung des linken Werkstückpaars 6b erforderliche Position gefahren. Der resultierende Zustand ist in Figur 5 gezeigt. Nun kann die Bearbeitung am linken Werkstückpaar 6b durchgeführt werden, während auf der rechten Seite des Aufspanntisches 2 Platz zur Entnahme der bearbeiteten Werkstücke 6a und zur Rüstung neuer Werkstücke zur Verfügung steht.

Es ist natürlich auch denkbar, dass beide Endwände 4a, 4d gleichzeitig verfahren werden, indem zuerst die rechte Wand 4d mit dem Ausleger nach links verfahren wird und im Verlauf der Bewegung, wenn die Kabine ihre Minimalabmessung erreicht hat, die linke Wand 4a nach links geschoben und mitgeführt wird. Wenn die rechte Wand 4d die neue Endposition erreicht, klinkt sich der Stab 7 aus der entsprechenden Eingriffsöffnung 8 aus und der Ausleger fährt gegebenenfalls zur linken Wand 4a, um sie an ihre neue Endposition zu verfahren.

Wie aus der vorangegangenen Beschreibung hervorgeht, geschieht die Anpassung des Schutzbereichs der variablen Schutzkabine 4 in Abhängigkeit der Werkstückabmessungen und ist somit nicht dauerhaft festgelegt. Längere Werkstücke können problemlos im Pendelbetrieb bearbeitet werden, indem man ihnen entsprechend kürzere Werkstücke zur Bearbeitung zuordnet. Auch ist es denkbar, Werkstücke, deren Abmessungen sich der Länge des Aufspanntisches annähern im Einzelbetrieb zu bearbeiten, da die Schutzkabine 4 beliebig und flexibel in ihrem Schutzbereich eingestellt werden kann. Die Nachteile von Schutzmatten sowohl in Hinsicht auf den einer Bedienperson zur Verfügung stehenden, abgesicherten Arbeitsbereich als auch in Hinsicht auf maximale Werkstückabmessungen werden auf einfache und kostengünstige Weise überwunden.

## Patentansprüche

1. Verfahren zur Pendelbearbeitung von Werkstücken, umfassend die folgenden Schritte:
- Definieren von äußersten Bearbeitungspositionen auf einer Werkstückauflage in Abhängigkeit der Werkstückabmessungen
- Einstellen eines Schutzbereichs einer variablen Schutzkabine jeweils auf Grundlage der äußersten Bearbeitungspositionen
- Bearbeiten des Werkstücks

2. Verfahren nach Anspruch 1, wobei mehrere Werkstücke auf die Werkstückauflage aufgelegt werden, die dementsprechend mehrere äußerste Bearbeitungspositionen definieren.

3. Verfahren nach Anspruch 2, wobei im Rahmen der Pendelbearbeitung mehrere, den Werkstücken entsprechende Bearbeitungspositionen nacheinander angefahren werden.

4. Verfahren nach Anspruch 3, wobei in jeder Bearbeitungsposition der Schutzbereich der variablen Schutzkabine den äußersten Bearbeitungspositionen des zu bearbeitenden Werkstücks entsprechend eingestellt wird.

5. Verfahren nach einem der vorangehenden Ansprüche, wobei eine jeweils minimale Ausdehnung des Schutzbereichs sich aus den Abmessungen eines Werkstücks unter Berücksichtigung eines Sicherheitsabstands zu Bearbeitungswerkzeugen ergibt.

6. Verfahren nach einem der vorangehenden Ansprüche, wobei der Schritt des Einstellens des Schutzbereichs das Positionieren von Endwänden der Schutzkabine an den äußersten Bearbeitungspositionen unter Berücksichtigung eines Sicherheitsabstands zu Bearbeitungswerkzeugen umfasst.

7. Verfahren nach einem der vorangehenden Ansprüche, wobei die Schutzkabine das gerade in Bearbeitung befindliche Werkstück umgibt, während der von der Schutzkabine ausgeschlossene Bereich der Werkstückauflage frei für die Rüstung bzw. Entnahme eines oder mehrerer weiterer Werkstücke zur Verfügung steht.

8. Vorrichtung zur Pendelbearbeitung von Werkstücken, umfassend eine Werkstückauflage, ein über der Werkstückauflage verfahrbares Bearbeitungsaggregat sowie eine variable Schutzkabine, deren Ausdehnung in Abhängigkeit der Abmessungen der zu bearbeitenden Werkstücke einstellbar ist.

9. Vorrichtung nach Anspruch 8, wobei die Schutzkabine aus Paneelen besteht, die miteinander gekoppelt und teleskopartig ausziehbar sind, um so eine variable Ausdehnung der Schutzkabine zu ermöglichen.

10. Vorrichtung nach Anspruch 8 oder 9, wobei die Ausdehnung der Schutzkabine in Längs- und/oder Querrichtung variabel ist.

11. Vorrichtung nach Anspruch 8, 9 oder 10, wobei die Schutzkabine einen die Paneele tragenden Rahmen umfasst.

12. Vorrichtung nach einem der Ansprüche 8 bis 11, wobei die Paneele aus Kunststoff oder Metall sind.

13. Vorrichtung nach einem der Ansprüche 8 bis 12, wobei die Paneele aus Sicherheitsglas sind.
